# FASCICULE DE BREVET EUROPEEN

(11) **EP 2 609 296 B1**
(45) Date de publication et mention de la délivrance du brevet: **12.02.2020**
(21) Numéro de dépôt: 11761656.5
(22) Date de dépôt: 23.08.2011
(51) Int. Cl.: F01D 21/04, F01D 25/24, F02C 7/05, F02K 1/82, F04D 29/52, F01D 25/26

(54) **PROCÉDÉ D'ACCROCHAGE D'UN BLINDAGE DE RÉTENTION SUR UN CARTER D'UNE TURBINE ET ENSEMBLE D'ACCROCHAGE POUR SA MISE EN OEUVRE**
VERFAHREN ZUR MONTAGE EINES RÜCKHALTESCHILDS AN EINEM TURBINENGEHÄUSE UND MONTAGEANORDNUNG ZUR UMSETZUNG DES VERFAHRENS
METHOD FOR MOUNTING A RETENTION SHIELD ON A TURBINE CASING, AND MOUNTING ASSEMBLY FOR IMPLEMENTING SAME

(30) Priorité: 26.08.2010 FR 1056795
(43) Date de publication de la demande: 03.07.2013
(73) Titulaire: Safran Helicopter Engines, 64510 Bordes (FR)
(72) Inventeur: SAHORES, Jean-Luc, Pierre, F-64110 Mazeres-lezons (FR); JAUREGUIBERRY, Carole, F-64110 Jurancon (FR); CASAUX-BIC, Jean-Maurice, F-64680 Buziet (FR); DESCUBES, Olivier, Pierre, F-64800 Nay (FR)
(74) Mandataire: Gevers & Orès
(86) Numéro de dépôt international: PCT/FR2011/051946
(87) Numéro de publication internationale: WO 2012/025690

(56) Documents cités:
- EP-A1- 0 132 182
- EP-A1- 1 607 582
- EP-A2- 1 467 066
- FR-A1- 2 898 870
- US-A- 2 722 801
- US-A- 2 795 108
- US-A- 4 648 795
- US-A1- 2003 202 876

## Description

L'invention concerne un procédé d'accrochage de blindage sur un carter de structure moteur d'une turbine, en particulier d'une turbine montée sur un aéronef ou d'une turbine industrielle terrestre, ainsi qu'un ensemble d'accrochage de mise en œuvre d'un tel procédé.

Le domaine de l'invention est plus particulièrement celui de la protection des moteurs, en particulier de turbine de puissance telle que des turbomachines d'aéronefs. La structure moteur nécessite la présence d'un blindage de protection pour confiner toute pièce ou élément pouvant se détacher de la structure moteur ou du carter. En particulier, les blindages de turbine libre réalisent la rétention de toutes les pales de turbine libres lors d'un événement de type « blade-shedding » (rupture d'aube en langue anglaise) en survitesse. Les pales sont en effet conçues pour rompre dans une plage de vitesses donnée de manière à garantir l'opérabilité du moteur en dessous d'un certain seuil et garantir l'intégrité des disques au-delà de ce seuil.

Un tel blindage est en général imbriqué à l'architecture du carter moteur et des pièces adjacentes. Il peut se limiter à une partie massive. Le blindage est fixé au carter par de nombreuses brides d'assemblage ou équivalents.

Mais il apparaît que la durée de vie de ces brides de blindage peut être fortement limitée. En particulier, les différences d'inertie thermique et de raideur entre les brides et les pièces avoisinantes impactent le comportement des pièces en régimes de transition, c'est-à-dire en montée ou baisse de puissance.

Selon une autre architecture, un blindage interne baignant dans un air chaud est monté entre deux carters. Cependant, un tel environnement peut limiter les capacités de rétention du blindage qui nécessitera alors des épaisseurs plus conséquentes. De plus, la présence d'un carter externe se traduit par une masse supplémentaire non négligeable.

Dans ces architectures, les efforts sont transmis directement à la structure moteur. Une telle transmission peut provoquer un détachement progressif des fixations ainsi que des vibrations du blindage préjudiciable à la sécurité du vol.

Il existe par ailleurs des blindages fixés par vis en point haut positionnées par centrage à l'aide de pions pointant sur la vis. Ce montage nécessite un réglage précis et délicat à mettre en œuvre. De plus, la durée de vie des pions est aléatoire au regard des transitions vibratoires et autres phénomènes: « fretting » (glissement partiel en anglais), cisaillement,...

L'art antérieur comprend les documents US-A-4648795 et EP-A1-0132182. Le document US-A-4648795 décrit notamment le montage rigide d'une garniture de confinement à l'intérieur d'un carter d'une turbine.

L'invention vise à pallier les inconvénients des technologies décrites ci dessus, et en particulier à s'affranchir de l'inertie thermique du blindage qui agit sur le comportement mécanique des pièces de la structure moteur. Elle vise également à minimiser la masse du blindage, tout en simplifiant le montage sans nuire à la robustesse du blindage.

Pour ce faire, l'invention prévoit une fixation souple du blindage permettant de réaliser une section fusible limitant les efforts transmis à la structure moteur.

Plus précisément, l'invention a pour objet un procédé d'accrochage d'un blindage de rétention à l'extérieur d'un carter d'une structure moteur d'une turbine selon la revendication 1, consistant à coupler par liaison tangentielle le blindage sur le carter entre des points du blindage et du carter suffisamment éloignés en fonction de la courbure du blindage et du carter entre ces points de sorte à réaliser un couplage souple entre eux apte à fournir un positionnement vibratoire et une tenue mécanique suffisante sous chargement thermomécanique. Dans le cas de turbines d'aéronef, le positionnement vibratoire et la tenue mécanique sont alors également maîtrisés sous manœuvres de l'aéronef.

Dans ces conditions, il apparaît que le blindage est suffisamment proche du carter pour que ce dernier contribue avantageusement à la rétention des débris ou des fragments de pièces éjectés. Le blindage externe reste suffisamment froid pour garantir la rétention de ces pièces avec des épaisseurs relativement plus faibles.

Cette architecture permet ainsi une isolation thermique et mécanique du blindage au regard des pièces de la structure moteur sous carter qui peuvent être sollicitées en fatigue thermomécanique. De plus, la souplesse générée permet de s'affranchir d'un dispositif de réglage entre le blindage et le carter.

Selon des modes de mise en œuvre particuliers :
- un amortissement en vibration est également assuré via des lames ressort annulaires disposées entre le blindage et le carter ;
- un dimensionnement des liaisons est déterminé en fonction de la charge thermomécanique à laquelle les liaisons sont soumises ;
- le nombre de liaisons est déterminé et les liaisons réparties de sorte à minimiser les efforts résultant des transitoires thermomécanique et optimiser ainsi la durée de vie de l'accrochage au regard des cas de charge auxquels le moteur est soumis et du positionnement vibratoire de l'ensemble blindage et carter, en particulier dans la zone des basses fréquences d'excitation.

Pour la mise en œuvre du procédé ci-dessus, l'invention se rapporte également à un ensemble de blindage de rétention et de carter d'une structure moteur d'une turbine selon la revendication 5, comportant des pattes de liaison entre le carter et le blindage avec des points de fixation au carter et au blindage. Dans cet ensemble, les points de fixation sont suffisamment éloignés en fonction de la courbure du blindage et du carter pour que la liaison soit sensiblement tangentielle entre les pattes d'une part et le blindage ou le carter d'autre part aux points de fixation, et que les pattes présentent un degré de souplesse prédéterminé.

Selon des modes de réalisation particuliers :
- des lames ressort aptes à amortir des vibrations sont prévues de manière annulaire entre le blindage et le carter ;
- il est prévu au moins un point de fixation sur le blindage et au moins un point de fixation sur le carter par patte ;
- la fixation des pattes sur le carter est réalisée par des vis dans des bossages de rigidification soudés dans la peau du carter, les vis présentant des têtes aptes à se déplacer dans des regards formés dans le blindage ;
- la fixation des pattes au blindage est réalisée par des rivets traversant le blindage ;
- l'ensemble d'accrochage comporte un nombre de pattes de liaison adapté au dimensionnement, les pattes étant réparties régulièrement et de manière annulaire entre le carter et le blindage et chaque patte étant fixée par une vis au carter et un rivet au blindage.

D'autres caractéristiques et avantages de l'invention apparaîtront à la lecture de la description détaillée d'exemples de réalisation ci-après, en référence aux figures annexées qui représentent, respectivement :
- la figure 1, une demi - vue en coupe partielle le long de l'axe longitudinale d'une turbine libre muni d'un ensemble d'accrochage conforme à l'invention ;
- la figure 2, une vue partielle selon un plan II-II de la vue précédente, mettant en évidence la position d'une patte de l'ensemble d'accrochage conforme à l'invention, et
- la figure 3, une vue perspective partielle du blindage muni de pattes d'accrochage selon l'invention.

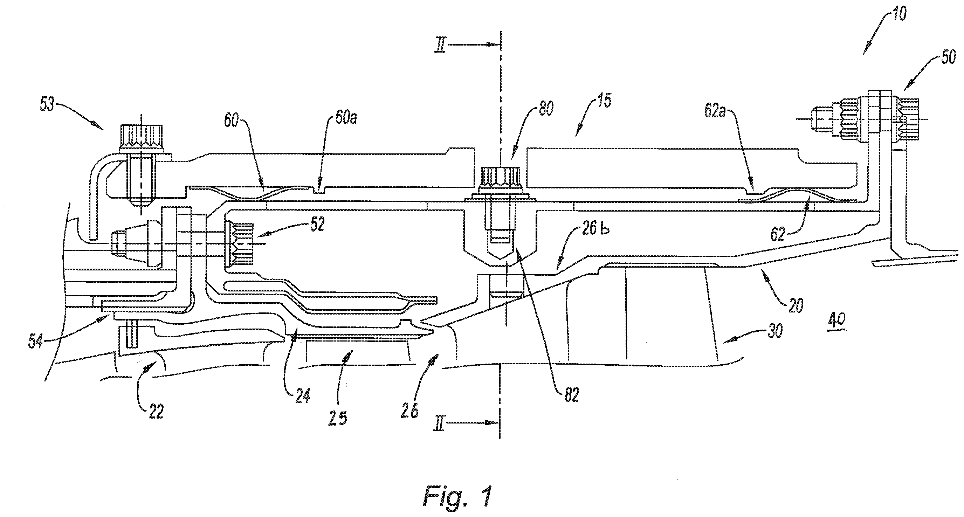

En référence à la vue en coupe partielle de la figure 1, la turbine libre 10 comporte en particulier un blindage externe 15 et un carter 20 qui constitue la structure principale du moteur et auquel viennent se rattacher les éléments formant la veine d'air : les distributeurs de turbine 22 et 26, les anneaux de turbine 24 et 26b et les roues de turbine 25 et 30, via une structure de palier (non représentée). Chaque aubage est composé d'un aubage fixe ou stator « distributeur » de flux d'air suivi - dans le sens de l'écoulement des flux d'air - d'un aubage ou roue mobile, et d'une veine de sortie 40 d'accès aux tuyères (non représentées).

Les différentes étanchéités sont assurées par des brides ou des joints 50, 52, et 54 entre différentes pièces voisines du carter 20 lui-même en liaison avec le blindage 15.

Par ailleurs, deux lames de tôle ressort annulaires 60 et 62 sont prévues entre le blindage 15 et le carter 20 afin d'amortir les vibrations, par exemple lors de transitions thermomécaniques. Ces lames sont agencées dans des logements bordés par des nervures 60a, 62a. Alternativement, ces lames peuvent être fixées à une bride ou un lien, par exemple sur la bride 50 ou la vis 53 dans l'exemple illustré.

Les lames ressort amortissent les vibrations entre le blindage et le carter en liaison avec les pattes de couplage entre eux. Avantageusement, ces lames peuvent être axialement fendues de manière à dissiper efficacement l'énergie thermique et améliorer la robustesse de l'ensemble en vibration.

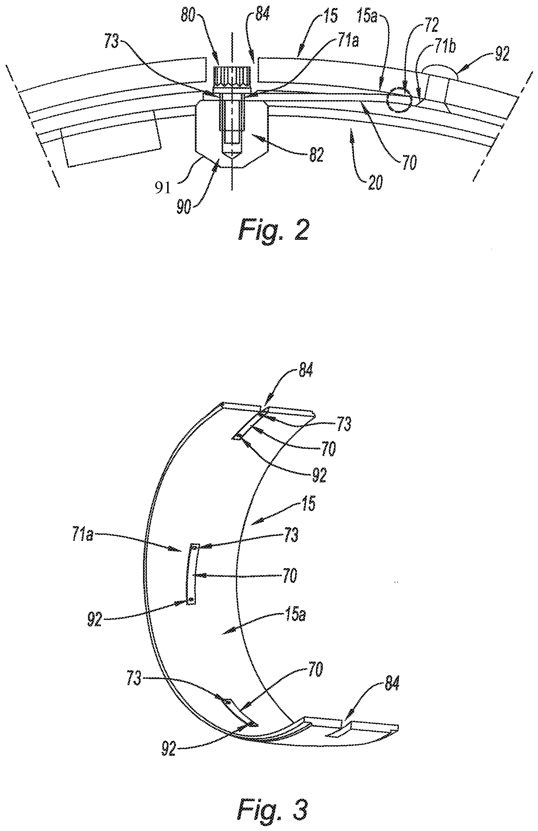

Une patte tangentielle 70 apparaît plus précisément sur la vue de la figure 2, en coupe II-II de la figure 1, entre une tête de vis 80 et la vis 82. La vis est introduite dans un bossage taraudé 90, soudé dans la peau 91 du carter 20. Alternativement, le bossage taraudé 90 peut être remplacé par un écrou. La tête de vis 80 est agencée dans un regard 84 formé dans le blindage 15. La tête 80 peut donc, lors de vibration, osciller librement dans le regard 84.

La patte 70 est d'abord montée, par un trou 73 formé à l'une de ses extrémités 71a, sur une portion non filetée de la vis 82 et, à l'autre extrémité, sur un rivet 92 traversant le blindage 15. La vis 82 est ensuite entièrement introduite dans le plot 90 et le rivet 92 écrasé. Dans ces conditions, la patte 70 est montée sensiblement tangentiellement au carter 20 et au blindage 15. Pour ce faire, la patte 70 est légèrement courbée dans une zone 72 si bien que - à proximité du rivet - son autre extrémité 71b vienne contre la face interne 15a du blindage 15.

En cas de rupture des pattes 70, le blindage 15 est maintenu sensiblement en place par le positionnement rapproché des têtes de vis 80 dans les regards 84 du blindage. Ce positionnement rapproché limite également le passage des pièces détachées. De plus, les lames ressort 60, 62 (figure 1) garantissent le maintien radial du blindage en cas de rupture des pattes de liaison.

La longueur des pattes 70, et donc la distance entre les vis 82 et les rivets 92, est fonction de la courbure semblable du blindage et du carter entre vis et rivets pour obtenir des liaisons tangentielles. Les dimensions des pattes sont réglées en largeur, longueur et épaisseur pour être adaptées au calcul de la charge thermomécanique à laquelle elles sont soumises pour limiter la transmission des efforts au carter et donc à la structure moteur.

Sur la vue perspective partielle de la figure 3 d'un demi-blindage 15, les pattes de liaison 70 apparaissent régulièrement réparties sur la face interne 15a du blindage 15 ainsi que les rivets 92 de fixation de ces pattes sur le blindage 15. Les trous 73 de montage des pattes 70 sur les vis 82 (figure 2) apparaissent également. Dans cet exemple, six pattes sont ainsi prévues pour l'ensemble du blindage.

L'invention n'est pas limitée aux exemples de réalisation décrits et représentés. Ainsi, le nombre de pattes peut être plus important de manière à adapter les modes vibratoires de l'ensemble et/ou pour garantir la tenue aux charges sous les manœuvres de vol. En particulier pour des turbines industrielles terrestres, le nombre de pattes peut être de quelques dizaines, voire plus, du fait des diamètres élevés de ce type de turbine.

Par ailleurs, la section des rivets peut être dimensionnée pour que, lors d'une rupture d'aube, les efforts transmis à la structure moteur soient limités. Les pattes peuvent avoir une forme générale en « V » ou en « W » afin de lier deux ou trois rivets de fixation au blindage à, respectivement, une ou deux vis de fixation sur le carter.

## Revendications

1. Procédé d'accrochage d'un blindage (15) de rétention à l'extérieur d'un carter (20) d'une structure moteur (30) d'une turbine (10), le procédé comprenant une étape consistant à coupler le blindage (15) à l'extérieur du carter (20) par des pattes de liaison (70) orientées chacune dans une direction circonférentielle entre des points de fixation (82, 92) au blindage (15) et au carter (20) suffisamment éloignés en fonction de la courbure du blindage (15) et du carter (20) entre ces points de fixation (82, 92), chaque patte de liaison (70) étant fixée sensiblement tangentiellement au blindage (15) et au carter (20) de sorte à réaliser un couplage souple entre eux apte à fournir un positionnement vibratoire et une tenue mécanique suffisante sous chargement thermomécanique.

2. Procédé d'accrochage selon la revendication 1, dans lequel un amortissement en vibration est également assuré via des lames ressort annulaires (60, 62) disposées entre le blindage (15) et le carter (20).

3. Procédé d'accrochage selon l'une quelconque des revendications 1 ou 2, dans lequel un dimensionnement des pattes de liaison (70) est déterminé en fonction de la charge thermomécanique à laquelle les pattes de liaison (70) sont soumises.

4. Procédé d'accrochage selon l'une quelconque des revendications précédentes, dans lequel le nombre de pattes de liaison (70) est déterminé et les pattes de liaison (70) réparties de sorte à minimiser les efforts résultant des transitoires thermomécaniques.

5. Ensemble de blindage (15) de rétention et de carter (20) d'une structure moteur (30) d'une turbine (10) pour la mise en œuvre du procédé selon l'une des revendications précédentes, l'ensemble comportant un carter (20) et un blindage (15) de rétention couplé au carter (20) par des pattes de liaison (70) entre le carter (20) et le blindage (15) avec des points de fixation (82, 92) au carter (20) et au blindage (15), les points de fixation (82, 92) étant suffisamment éloignés en fonction de la courbure du blindage (15) et du carter (20) pour que chaque patte de liaison (70) soit fixée sensiblement tangentiellement au blindage (15) et au carter (20) aux points de fixation (82, 92), **caractérisé en ce que** le blindage (15) de rétention est couplé à l'extérieur du carter (20) par les pattes de liaison (70), et **en ce que** les pattes de liaison (70) sont orientées chacune dans une direction circonférentielle entre les points de fixation (82, 92) et présentent un degré de souplesse prédéterminé.

6. Ensemble selon la revendication précédente pour la mise en œuvre du procédé selon la revendication 2, dans lequel des lames ressort (60, 62) aptes à amortir des vibrations sont prévues de manière annulaire entre le blindage (15) et le carter (20).

7. Ensemble selon la revendication précédente, dans lequel les lames ressort (60, 62) sont fendues axialement.

8. Ensemble selon l'une quelconque des revendications 5 à 7, dans lequel il est prévu au moins un point de fixation (92) sur le blindage (15) et au moins un point de fixation (82) sur le carter (20) par patte de liaison (70).

9. Ensemble selon l'une quelconque des revendications 5 à 8, dans lequel la fixation des pattes de liaison (70) sur le carter (20) est réalisée par des vis (82) dans des bossages (90) soudés dans la peau (91) du carter (20), les vis (82) présentant des têtes (80) aptes à se déplacer dans des regards (84) formés dans le blindage (15).

10. Ensemble selon l'une quelconque des revendications 5 à 9, dans lequel la fixation des pattes de liaison (70) au blindage (15) est réalisée par des rivets (92) traversant le blindage (15).

## Patentansprüche

1. Verfahren zur Kopplung eines Rückhalteschilds (15) an der Außenseite eines Gehäuses (20) einer Motorstruktur (30) einer Turbine (10), wobei das Verfahren einen Schritt umfasst, der darin besteht, den Schild (15) an die Außenseite des Gehäuses (20) durch Verbindungslaschen (70) zu koppeln, die jeweils in einer Umfangsrichtung zwischen Befestigungspunkten (82, 92) an dem Schild (15) und an dem Gehäuse (20), die in Abhängigkeit von der Krümmung des Schilds (15) und des Gehäuses (20) zwischen diesen Befestigungspunkten (82, 92) ausreichend beabstandet sind, wobei jede Verbindungslasche (70) im Wesentlichen tangential an dem Schild (15) und an dem Gehäuse (20) befestigt ist, um eine flexible Kopplung zwischen ihnen zu realisieren, die in der Lage ist, eine Vibrationspositionierung und einen ausreichenden mechanischen Halt unter thermomechanischer Belastung bereitzustellen.

2. Verfahren zur Kopplung nach Anspruch 1, wobei die Vibrationsdämpfung auch über ringförmige Federblätter (60, 62) sichergestellt wird, die zwischen dem Schild (15) und dem Gehäuse (20) angeordnet sind.

3. Verfahren zur Kopplung nach einem der Ansprüche 1 oder 2, wobei eine Dimensionierung der Verbindungslaschen (70) in Abhängigkeit von der thermomechanischen Belastung, der die Verbindungslaschen (70) ausgesetzt sind, bestimmt wird.

4. Verfahren zur Kopplung nach einem der vorstehenden Ansprüche, wobei die Anzahl der Verbindungslaschen (70) bestimmt wird und die Verbindungslaschen (70) so verteilt sind, dass die aus thermomechanischen Transienten resultierenden Kräfte minimiert werden.

5. Anordnung aus Rückhalteschild (15) und Gehäuse (20) einer Motorstruktur (30) einer Turbine (10) zur Umsetzung des Verfahrens nach einem der vorstehenden Ansprüche, wobei die Anordnung ein Gehäuse (20) und einen Rückhalteschild (15) beinhaltet, der an dem Gehäuse (20) durch Verbindungslaschen (70) zwischen dem Gehäuse (20) und dem Schild (15) mit Befestigungspunkten (82, 92) an dem Gehäuse (20) und an dem Schild (15) gekoppelt ist, wobei die Befestigungspunkte (82, 92) in Abhängigkeit von der Krümmung des Schilds (15) und des Gehäuses (20) ausreichend beabstandet sind, damit jede Verbindungslasche (70) im Wesentlichen tangential an dem Schild (15) und an dem Gehäuse (20) an den Befestigungspunkten (82, 92) befestigt ist, **dadurch gekennzeichnet, dass** der Rückhalteschild (15) durch die Verbindungslaschen (70) an der Außenseite des Gehäuses (20) gekoppelt ist, und dadurch dass die Verbindungslaschen (70) jeweils in einer Umfangsrichtung zwischen den Befestigungspunkten (82, 92) ausgerichtet sind und einen vorbestimmten Grad an Flexibilität aufweisen.

6. Anordnung nach dem vorstehenden Anspruch zur Umsetzung des Verfahrens nach Anspruch 2, wobei zwischen dem Schild (15) und dem Gehäuse (20) Federblätter (60, 62) ringförmig vorgesehen sind, die in der Lage sind, Vibrationen zur dämpfen.

7. Anordnung nach dem vorstehenden Anspruch, wobei die Federblätter (60, 62) axial geschlitzt sind.

8. Anordnung nach einem der Ansprüche 5 bis 7, wobei mindestens ein Befestigungspunkt (92) auf dem Schild (15) und mindestens ein Befestigungspunkt (82) auf dem Gehäuse (20) pro Verbindungslasche (70) vorgesehen sind.

9. Anordnung nach einem der Ansprüche 5 bis 8, wobei die Befestigung der Verbindungslaschen (70) auf dem Gehäuse (20) durch Schrauben (82) in Buckeln (90) realisiert wird, die in die Haut (91) des Gehäuses (20) eingeschweißt sind, wobei die Schrauben (82) Köpfe (80) aufweisen, die in der Lage sind, sich in im Schild (15) ausgebildeten Schächten (84) zu bewegen.

10. Anordnung nach einem der Ansprüche 5 bis 9, wobei die Befestigung der Verbindungslaschen (70) am Schild (15) durch Nieten (92) realisiert wird, die durch den Schild (15) hindurchgehen.

## Claims

1. A method of mounting a retention shield (15) on the outside of a casing (20) of an engine structure (30) of a turbine (10), the method comprising a step consisting of coupling the shield (15) to the outside of the casing (20) through lugs (70) each oriented in a circumferential direction between points for fastening (82, 92) to the shield (15) and to the casing (20) sufficiently spaced apart in accordance with the curvature of the shield (15) and the casing (20) between these fastening points (82, 92), each lug (70) being fastened substantially tangentially to the shield (15) and to the casing (20) so as to implement a flexible coupling between them being able to provide a vibratory positioning and a sufficient mechanical strength under a thermo-mechanical load.

2. Method of mounting according to claim 1, wherein a vibration dampening is also provided via annular spring blades (60, 62) arranged between the shield (15) and the casing (20).

3. Method of mounting according to any one of claims 1 or 2, wherein a lug sizing (70) is determined in accordance with the thermo-mechanical load to which the lugs (70) are submitted.

4. Method of mounting according to any one of the preceding claims, wherein the number of lugs (70) is determined and the lugs (70) distributed so as to minimise the forces resulting from the thermo-mechanical transitions.

5. A retention shield (15) and casing (20) assembly of an engine structure (30) of a turbine (10) for the implementation of the method according to any one of the preceding claims, the assembly comprising a casing (20) and a retaining shield (15) coupled to the casing (20) by lugs (70) between the casing (20) and the shield (15), with fastening points (82, 92) to the casing (20) and the shield (15), the fastening points (82, 92) being sufficiently spaced apart in accordance with the curvature of the shield (15) and the casing (20) so that each lug (70) is fastened substantially tangentially to the shield (15) and to the casing (20) to the fastening points (82, 92), **characterised in that** the retaining shield (15) is coupled to the outside of the casing (20) by the lugs (70), and **in that** the lugs (70) are oriented each in a circumferential direction between the fastening points (82, 92) and present a predetermined degree of flexibility.

6. Assembly according to the preceding claim for the implementation of the method according to claim 2, wherein spring blades (60, 62) adapted to dampen vibrations are provided in a ring configuration between the shield (15) and the casing (20).

7. Assembly according to the preceding claim, wherein the spring blades (60, 62) are axially split.

8. Assembly according to any one of claims 5 to 7, wherein at least one fastening point (92) on the shield (15) and at least one fastening point (82) on the casing (20) are provided per lug (70).

9. Assembly according to any of claims 5 to 8, wherein fixing of the lugs (70) to the casing (20) is implemented by screws (82) in bosses (90) welded to the casing (20) skin (91), the screws (82) presenting heads (80) adapted to be displaced in openings (84) formed in the shield (15).

10. Assembly according to any one of claims 5 to 9, wherein the fixing of lugs (70) to the shield (15) is implemented by rivets (92) crossing the shield (15).
